# EUROPEAN PATENT SPECIFICATION

(11) **EP 0 570 035 B1**
(45) Date of publication and mention of the grant of the patent: **11.09.1996**
(21) Application number: 93200945.9
(22) Date of filing: 01.04.1993
(51) Int. Cl.: A01G 9/12, B65H 75/04

(54) **A combination of a wire reel and an attachment to be provided on the wire reel**
Kombination einer Drahtrolle und eines Hilfstücks and dieser Drahtrolle
Combinaison d'un enrouler et d'une pièce montée sur l'enrouleur

(30) Priority: 11.05.1992 NL 9200834
(43) Date of publication of application: 18.11.1993
(73) Proprietor: Delisse, Willem Jozef, NL-5469 ST Erp (NL)
(72) Inventor: Delisse, Willem Jozef, NL-5469 ST Erp (NL)
(74) Representative: Vollebregt, Cornelis Jacobus, Ir.

(56) References cited:
- EP-A- 0 507 378
- US-A- 3 666 197
- US-A- 3 958 770

## Description

The invention relates to an arrangement for the training of plants comprising an wire reel, on which a wire can be wound, and an attachment to be provided on the wire reel.

Wire reels are used in horticulture, for example in the cultivation of tomato plants and the like. A wire reel, on which ± 8 - 9 metres of wire are wound, is suspended overhead in a glasshouse, after which a length of ± 3 metres of wire is unwound from the reel and the unwound length of wire is secured to the ground with its bottom end. Then a growing tomato plant is trained along said length of wire and usually secured by means of clips, as for example described in Dutch patent application no. 8403826. Generally the tomatoes near the lower end of the plant ripen first and consequently they are harvested first, whilst in subsequent periods tomatoes are harvested from higher parts of the plant. In order to keep the parts of the plant from which tomatoes are to be harvested within reach thereby, wire is gradually unwound from the reel during the growth and harvesting period.

The unwinding of the first length of wire following suspending of the reel is a time-consuming activity, also in view of the large number of reels that have to be suspended in a glasshouse in which the tomato plants are raised. In some cases people have therefore proceeded to refrain from winding up the last 3 metres of wire on the reel mechanically, but to wind these 3 metres up loosely by hand and tie them to the reel as a separate bundle of a string, so that the user only needs to cut the string, after which the wire portion wound up in a loose bundle falls down, ready to be secured to the ground with its bottom end. Said forming of a loose bundle, which is to be secured to the reel by means of a string, is likewise a laborious activity, however.

According the object of the invention is to obtain a combination of a wire reel and an attachment, which will make it possible to overcome the above-mentioned drawbacks.

According to the invention this can be achieved by using an arrangement for the training of plants comprising a wire reel on which a wire can be wound and an attachment on said reel, said attachment comprising means for removably mounting said attachment on said reel and an elongated carrying part wherein said wire may comprise two distinct number of windings, a first number of windings being directly supported by said wire reel and a second number of windings being supported on said wire reel and said carrying part in such a way, that said carrying part extends between said first number of windings and said second number of windings, transverse to said windings and over a recess of the wire reel accommodating the first number of windings, whilst said carrying part further has been provided with at least one projection, which extends from the carrying part in a direction remote from the reel and transverse to the parts of the windings supported by said carrying part for holding said second number of windings on the carrying part.

The invention is also directed to an attachment having the features of claim 7.

When using such an arrangement the machine by means of which the wire is wound on the wire reel can be stopped for a moment after the first number of windings to be wound up has been wound on the reel, after which the attachment can be fitted on the wire reel. Then the machine can be actuated for winding again, whereby the second number of windings forming the remaining ± 3 metres of wire are wound on the carrying part of the attachment.

After the arrangement thus obtained has been suspended in a glasshouse or the like, at least the projection can be readily moved in such a manner, that the second number of windings wound on the carrying part of the attachment can be slipped from the carrying part and will freely drop to the ground. When using the arrangement according to the invention it is thus possible to effect a quick winding of the wire on the reel as well as a quick detachment of a desired length of wire from the reel.

The invention will be explained in more detail hereafter with reference to the accompanying figures, which show a few possible embodiments of the construction according to the invention.

Figure 1 is a sectional view of a first embodiment of an attachment according to the invention.

Figure 2 is a side elevation of the attachment shown in figure 1, seen in the direction of the arrow II in figure 1.

Figure 3 is a side elevation of the attachment shown in figure 1, seen in the direction of arrow III in figure 1.

Figures 4 - 6 are each diagrammatic elevational views of a part of a reel, with an attachment provided thereon shown in section, whereby the attachment is depicted in various positions with respect to the reel.

Figure 7 is a sectional view of a second possible embodiment of an attachment according to the invention.

Figure 8 is a side elevation of Figure 7, seen in the direction of the arrow VIII in Figure 7.

Figure 9 is a side elevation of Figure 7, seen in the direction of the arrow IX in Figure 7.

Figures 10 - 12 are elevational views, corresponding with Figures 4 - 6, of a wire clip with the attachment shown in Figures 7 - 9.

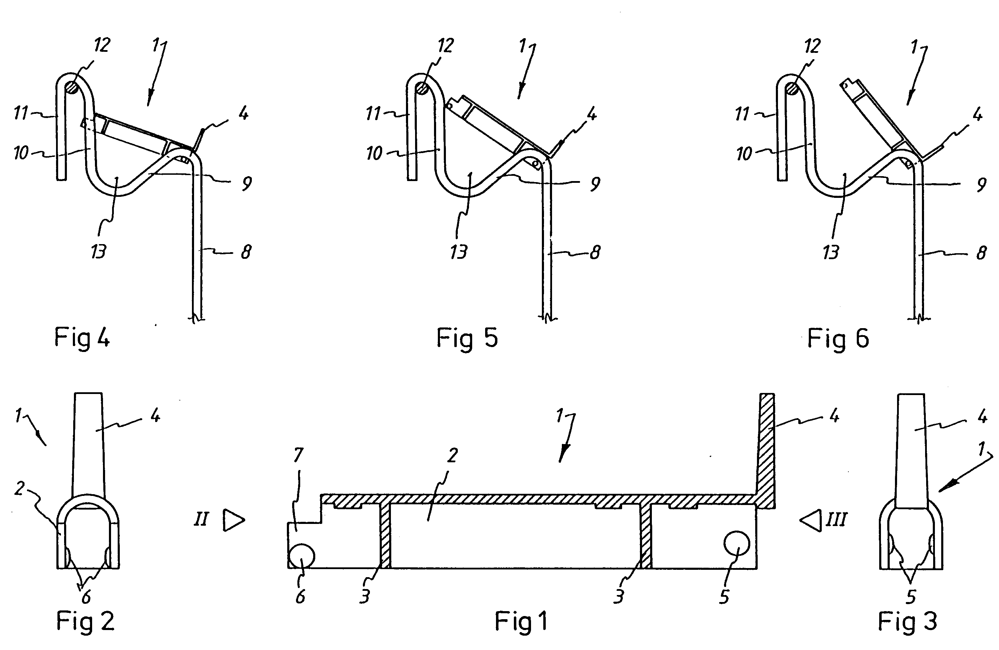

The attachment 1 shown in Figure 1 comprises a carrying part 2 of at least substantially U-shaped section, in which stiffening plates 3 are provided. A projection in the shape of an elongated finger 4 is provided on one end of said carrying part 2. Near this end of the carrying part 2 slightly spherical projections 5 are provided on the facing sides of the at least substantially parallel legs of the U-shaped carrying part. Similar projections 6 are provided on wings 7 being in line with the parallel legs of the U-shaped carrying part.

The reel is folded of a bar-shaped material and comprises a straight central portion 8, which is bent through an angle of more than 90° at both ends (only one end being shown in Figures 4 - 6), merging into a leg 10, which extends at least substantially parallel to the central portion 8. The end of the leg 10 remote from the leg 9 joins a leg 11 extending substantially parallel to the leg 10. The legs 10 and 11 form a hook, by means of which the reel can be suspended, in the manner shown in Figure 4, from a horizontally extending wire or cable 12 provided in a glasshouse.

The legs 9 and 10 define a space 13, both at the upper part of the reel shown in Figures 4 - 6 and at the lower part of the reel (not shown in the Figures), in which winding up of the wire to be wound on the reel takes place.

Initially the wire will be mechanically wound on the reel in the usual manner. Prior to winding up the last part of the wire, for example a length of ± 3 metres, which must be detached from the reel immediately after suspending the reel in a glasshouse, as described above, the machine by means of which the wire is being wound on the reel is stopped and the attachment 1 is fitted on the reel in the manner shown in Figure 4. As will be apparent from Figure 4 the bend between the central portion 8 and the leg 9 will thereby come to lie between those parts of the parallel legs of the carrying part 2 that are located to the right of the plate 3 lying furthest to the right. The leg 10 comes to lie between the wings 7 and adjacent parts of the legs of the carrying part 2. The projections 5 and 6 thereby engage behind the respective bar-shaped parts of the reel, so as to obtain a releasable fastening of the attachment 1 on the reel. After the attachment has been provided in this manner the device for winding the wire on the reel can be actuated again, and it will be apparent, that the remaining part of the wire is then wound on the carrying part 2 of the attachment, which extends across the space 13 in the position shown in Figure 4.

After such a reel provided with an attachment has been suspended from a cable 12 or the like in the manner shown in Figure 4, the attachment can be turned clockwise in the manner shown in Figures 5 and 6 for detaching the part of the wire that is wound on the carrying part of the attachment 1, in order to slip this part of the wire from the reel and allow it to drop to the ground. Another possibility is to connect the projecting part 4, which prevents the wire from being slipped off prematurely, to the remaining part of the attachment in such a manner, that said projecting part 4 can be readily broken off the other part of the attachment 1, so that after the projection 4 has been broken off the wire can be slipped from the attachment 1. Subsequently the attachment 1 may be removed.

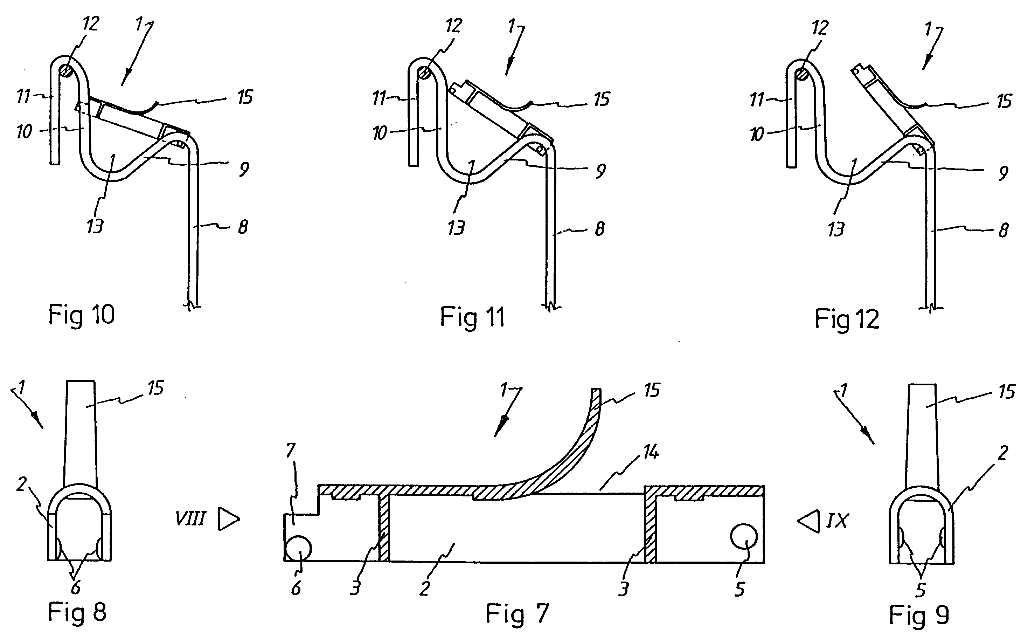

Figures 7 - 9 show a second possible embodiment of an attachment. Since this attachment largely corresponds with the attachment shown in Figures 1 - 3, the attachment will not be described in its entirety again, but corresponding parts in Figures 7 - 9 have been given the same reference numerals as in Figures 1 - 3.

In the embodiment shown in Figures 7 - 9 a recess 14 is provided in the intermediate member connecting the legs of the carrying part 2, near the centre of the carrying part 2, instead of the projecting finger 4, whilst a curved resilient projection 15, which extends upwards in the longitudinal direction of the attachment, joins an edge of said recess.

As is apparent in particular from Figures 10 - 12 said projection 15 will prevent that windings of the wire wound on the wire reel which are passed over the attachment in the above-described manner unintentionally slip from the attachment, and thus from the reel. For detaching the windings passed over the attachment from the reel the attachment may be pivoted again in the manner shown in Figures 11 and 12, and/or the projection 15, if resilient, may be pushed down, seen in the Figures, so as to enable the windings passed over the attachment to slip off.

## Claims

1. Arrangement for the training of plants comprising a wire reel (8-11) on which a wire can be wound and an attachment (1) on said reel, said attachment comprising means (5-7) for removably mounting said attachment on said reel (8-11) and an elongated carrying part wherein said wire comprises two distinct number of windings, a first number of windings being directly supported by said wire reel and a second number of windings being supported on said wire reel (8-11) and said carrying part (2) in such a way, that said carrying part extends between said first number of windings and said second number of windings, transverse to said windings and over a recess (13) of the wire reel accommodating the first number of windings, whilst said carrying part (2) further has been provided with at least one projection (4, 15) which extends from the carrying part (2) in a direction remote from the reel (8-11) and transverse to the parts of the windings supported by said carrying part (2) for holding said second number of windings on the carrying part.

2. An arrangement according to claim 1, characterised in that said attachment (1) is pivotally coupled to the reel near one side of said reel (8-11) in a direction transverse to the longitudinal direction of said wire.

3. An arrangement according to claim 1 or 2, characterised in that one end of the carrying part (2) is located near one side (8) of the wire reel, near the outer circumference of said wire reel (8-11).

4. An arrangement according to any one of the preceding claims, characterised in that said projection (4) is connected to the attachment (1) in such a manner, that it can be readily broken off.

5. An arrangement according to any of the claims 1-3, characterised in that said projection (15) can be moved against spring force into a position in which windings wound on the carrying part (2) can be slipped from the attachment (1).

6. An arrangement according to any one of the preceding claims, characterised in that said carrying part (2) has an at least substantially U-shaped cross-section, and that at least near one end of the carrying part (2) projections (5, 6) are provided on the facing sides of at least substantially parallel legs of the carrying part.

7. An attachment (1) obviously intended for using in an arrangement according to any one of the preceding claims, whereby said attachment has an elongated carrying part (2) with an at least substantially U-shaped cross-section and a projection (4, 15) which extends from the carrying part in a direction remote from the free edges of the legs of the U-shaped carrying part (2) whilst at one end of the U-shaped carrying part (2) the legs of said U-shaped carrying part have been lengthened with wings (7) and on the facing sides of said wings (7) as well as on the facing sides of the ends of the legs of the U-shaped carrying part (2) remote from said wings (7) there have been provided projections (5, 6).

## Patentansprüche

1. Anordnung für das Training bzw. die Aufzucht von Pflanzen, wobei die Anordnung folgendes aufweist: eine Drahtrolle (8-11), auf die ein Draht aufgewickelt werden kann sowie ein
Hilfselement (1) an der Rolle, wobei das
Hilfselement Mittel (5-7) zum abnehmbaren Anbringen des Hilfselements an der Rolle (8-11) und ein langgestrecktes Trägerteil aufweist, wobei der Draht zwei bestimmte Anzahlen von Windungen aufweist, und zwar eine erste Anzahl von Windungen, die direkt durch die Drahtspule oder - rolle getragen wird und eine zweite Anzahl von Windungen, die auf der Drahtrolle (8-11) und dem Trägerteil (2) getragen wird, und zwar in einer solchen Art und Weise, daß das Trägerteil sich zwischen der ersten Anzahl von Windungen und der zweiten Anzahl von Windungen erstreckt, und zwar quer zu den Windungen und über eine Ausnehmung (13) der Drahtrolle, die die erste Anzahl von Windungen aufnimmt, während das Trägerteil (2) ferner mit mindestens einem Vorsprung (4, 15) versehen ist, der sich von dem Trägerteil (2) in eine Richtung entfernt von der Rolle (8-11) und quer zu den Teilen der Windungen, die durch den Trägerteil (2) getragen werden, erstreckt zum Halten der zweiten Anzahl von Windungen auf dem Trägerteil.

2. Anordnung nach Anspruch 1, dadurch gekennzeichnet, daß das Hilfselement (1) schwenkbar mit der Rolle gekoppelt ist, und zwar in der Nähe einer Seite der Rolle (8-11), und zwar in einer Querrichtung zu der Längsrichtung des Drahtes.

3. Anordnung nach Anspruch 1 oder 2, dadurch gekennzeichnet, daß ein Ende des Trägerteils (2) in der Nähe einer Seite (8) der Drahtrolle angeordnet ist, und zwar in der Nähe des Außenumfangs der Drahtrolle (8-11).

4. Anordnung nach einem der vorhergehenden Ansprüche, dadurch gekennzeichnet, daß der Vorsprung (4) mit dem Hilfselement (1) in einer solchen Art und Weise verbunden ist, daß er leicht abgebrochen werden kann.

5. Anordnung nach einem der Ansprüche 1 bis 3, dadurch gekennzeichnet, daß der Vorsprung (15) gegen eine Federkraft in eine Position bewegt werden kann, in der Windungen, die auf den Trägerteil (2) gewickelt sind, von dem Hilfselement (1) abgenommen werden können.

6. Anordnung nach einem der vorhergehenden Ansprüche, dadurch gekennzeichnet, daß das Trägerteil (2) einen zumindest im wesentlichen U-förmigen Querschnitt aufweist, und daß mindestens in der Nähe eines Endes des Trägerteils (2) Vorsprünge (5,6) an den Stirnflächen von zumindest im wesentlichen parallelen Schenkeln des Trägerteils vorgesehen sind.

7. Ein Hilfselement (1), das offensichtlich zur Verwendung mit einer Anordnung gemäß irgendeinem der vorhergehenden Ansprüche dienen soll, wobei das
Hilfselement ein langgestrecktes Trägerteil (2) mit einem zumindest im wesentlichen U-förmigen Querschnitt und einem Vorsprung (4, 15) aufweist, der sich von dem Trägerteil in eine Richtung entfernt, von den freien Kanten der Schenkel des U-förmigen Trägerteils (2) erstreckt, während an einem Ende des U-förmigen Trägerteils (2) die Schenkel des U-förmigen Trägerteils mit Flügeln (7) verlängert wurden, und wobei an den gegenüber einander liegenden Seiten der Flügel (7) sowie den gegenüber einander liegenden Seiten der Enden der Schenkel des U-förmigen Trägerteils (2) entfernt von den Flügeln (7) Vorsprünge (5, 6) vorgesehen sind.

## Revendications

1. Dispositif pour le palissage de plantes comprenant un enrouleur de fil (8-11) sur lequel un fil peut être enroulé et une pièce accessoire (1) sur l'enrouleur, cette pièce accessoire (1) comprenant des moyens (5-7) pour monter d'une manière amovible la pièce accessoire (1) sur l'enrouleur de fil (8-11) et une partie allongée de support, dans lequel le fil comprend deux nombres distincts de spires, à savoir un premier nombre de spires qui sont directement supportées par l'enrouleur de fil (8-11) et un second nombre de spires qui sont supportées sur l'enrouleur de fil (8-11) et la partie de support (2) de telle façon que cette partie de support s'étende entre le premier nombre de spires et le second nombre de spires, transversalement par rapport à ces spires, et par-dessus un creux (13) de l'enrouleur de fil (8-11) recevant le premier nombre de spires, tandis que la partie de support (2) est pourvue d'au moins une saillie (4,15) qui s'étend à partir de la partie de support (2) dans une direction opposée à l'enrouleur de fil (8-11) et transversalement par rapport aux parties des spires supportées par la partie de support (2), afin de maintenir le second nombre de spires sur la partie de support (2).

2. Dispositif suivant la revendication 1 caractérisé en ce que la pièce accessoire (1) est accouplée à pivotement à l'enrouleur à proximité d'un côté de l'enrouleur de fil (8-11) dans une direction transversale par rapport à la direction longitudinale du fil.

3. Dispositif suivant l'une quelconque des revendications 1 ou 2 caractérisé en ce qu'une extrémité de la partie de support (2) est située à proximité d'un côté (8) de l'enrouleur de fil (8-11), au voisinage de la circonférence externe de l'enrouleur de fil (8-11).

4. Dispositif suivant l'une quelconque des revendications précédentes caractérisé en ce que la saillie (4) est reliée à la pièce accessoire (1) de telle façon qu'elle puisse être cassée aisément.

5. Dispositif suivant l'une quelconque des revendications 1 à 3 caractérisé en ce que la saillie (15) peut être déplacée, à l'encontre d'une force de rappel élastique, dans une position dans laquelle les spires enroulées sur la partie de support (2) peuvent être glissées à partir de la pièce accessoire (1).

6. Dispositif suivant l'une quelconque des revendications précédentes caractérisé en ce que la partie de support (2) a une section transversale au moins sensiblement en forme de U et des saillies (5,6) sont prévues, à proximité d'au moins une extrémité de la partie de support (2), sur les faces en regard d'ailes au moins sensiblement parallèles de la partie de support (2).

7. Pièce accessoire (1) destinée à être utilisée dans un dispositif suivant l'une quelconque des revendications précédentes caractérisée en ce quelle comporte une partie de support (2) allongée ayant une section transversale au moins sensiblement en forme de U et une saillie (4,15) qui s'étend à partir de la partie de support (2) dans une direction opposée à partir des bords libres des ailes de la partie de support (2) en forme de U, les branches de la partie de support (2) en forme de U ont été prolongées par des ailes (7) et sur les faces en regard des ailes (7) ainsi que sur les faces en regard des parties extrêmes des branches de la partie de support (2) en forme de U qui sont éloignées des ailes (7), sont prévus des bossages (5,6).
